# EUROPÄISCHE PATENTSCHRIFT

(11) **EP 2 240 351 B1**
(45) Veröffentlichungstag und Bekanntmachung des Hinweises auf die Patenterteilung: **27.01.2016**
(21) Anmeldenummer: 09708557.5
(22) Anmeldetag: 30.01.2009
(51) Int. Cl.: B60T 13/38, B60G 17/0195, B60G 17/017

(54) **BREMSANORDNUNG UND FAHRZEUG MIT EINER DERARTIGEN BREMSANORDNUNG**
BRAKE SYSTEM AND VEHICLE COMPRISING SAID BRAKE SYSTEM
SYSTÈME DE FREINAGE ET VÉHICULE ÉQUIPÉ D'UN TEL SYSTÈME DE FREINAGE

(30) Priorität: 04.02.2008 DE 102008007709
(43) Veröffentlichungstag der Anmeldung: 20.10.2010
(73) Patentinhaber: KNORR-BREMSE Systeme für Nutzfahrzeuge GmbH, 80809 München (DE)
(72) Erfinder: BALOGH, Levente, H-2310 Szigetszentmiklos (HU); HERGES, Michael, 80935 München (DE)
(74) Vertreter: Schönmann, Kurt
(86) Internationale Anmeldenummer: PCT/EP2009/000608
(87) Internationale Veröffentlichungsnummer: WO 2009/098004

(56) Entgegenhaltungen:
- EP-A- 1 800 916
- WO-A-03/042020
- DE-A1- 19 648 174

## Beschreibung

Die Erfindung betrifft eine Bremsanordnung für ein Fahrzeug, insbesondere für ein Nutzfahrzeug, mit jeweils zumindest einer Radbremseinrichtung an mindestens einer Vorder- und mindestens einer Hinterachse, die einen Betriebsbremsaktuator und einen Federspeicheraktuator aufweist, wobei die Radbremseinrichtung mittels einer Betriebsbremsbetätigungseinrichtung und einer Feststellbremsbetätigungseinrichtung betätigbar ist.

Ein Betriebsbremsaktuator spannt die Radbremseinrichtung mit steigender Druckbeaufschlagung mehr und mehr zu, wohingegen ein Federspeicheraktuator ohne Druckbeaufschlagung die Radbremseinrichtung mit der gesamten Federkraft zuspannt. Eine Druckbeaufschlagung eines Federspeicheraktuators spannt dessen Feder und wirkt somit der Zuspannung der Radbremseinrichtung entgegen. Federspeicheraktuatoren werden deshalb beispielsweise als Feststellbremse eingesetzt.

Bei Ausfall der Betriebsbremse oder von Teilen der Betriebsbremse wird die Feststellbremse bei manchen dieser Fahrzeuge auch während der Fahrt als Hilfsbremse verwendet.

Derartige Nutzfahrzeuge besitzen mindestens eine Vorderachse und mindestens eine Hinterachse.

Der Betriebsbremsteil solcher Bremsanordnungen ist zumindest zweikreisig ausgelegt, wobei zumeist ein Betriebsbremskreis der mindestens einen Vorderachse und der zweite der mindestens einen Hinterachse zugeordnet ist.

Um eine ausreichende Bremsfunktion der Feststellbremse, insbesondere bei Hilfsbremsfällen zu ermöglichen, werden bei manchen Nutzfahrzeugen Federspeicheraktuatoren an mehr als einer Achse verwendet.

Manche dieser Fahrzeuge verfügen über eine Niveauverstellung mittels Luftfederung zum Heben und Senken des gesamten Fahrzeugs. Dadurch können sich, abhängig von der Geometrie der Achsaufhängung, die kinematischen Achsabstände ändern.

Nachteilig bei einer derartigen Bremsanordnung ist nun, dass im Stillstand bei eingelegten Federspeicheraktuatoren die so ausgestatteten Räder fest mit der Achse verblockt sind, so dass es, beispielsweise bei einer Niveauverstellung zu Verspannungen des stehenden Fahrzeugs kommen kann, da die Achsabstände fixiert sind. Es können jedoch nicht alle Federspeicheraktuatoren gleichzeitig gelöst werden, da sich das Fahrzeug dann ungewünscht bewegen könnte. Ein Beispiel einer derartigen Bremsanordnung ist aus der DE-A-196 48174 bekannt.

Demgegenüber liegt der Erfindung die Aufgabe zugrunde, eine Bremsanordnung und ein mit einer derartigen Bremsanordnung versehenes Fahrzeug zu schaffen, bei denen eine Niveauverstellung bei gleichzeitiger Verhinderung des unerwünschten Wegrollens ermöglich ist.

Diese Aufgabe wird durch eine Bremsanordnung mit den Merkmalen des Patentanspruchs 1 und durch eine Bremsanordnung gemäß dem Patentanspruch 6 gelöst.

Die erfindungsgemäße Bremsanordnung für ein Fahrzeug, insbesondere für ein Nutzfahrzeug, hat zumindest zwei Radbremseinrichtungen, die einen Betriebsbremsaktuator und einen Federspeicheraktuator aufweist, wobei die Radbremseinrichtungen mittels mindestens einer Betriebsbremsbetätigungseinrichtung und mindestens einer Feststellbremsbetätigungseinrichtung betätigbar sind.

Erfindungsgemäß ist zumindest der Federspeicheraktuator einer Radbremseinrichtung mittels einem von der Betriebsbremsbetätigungseinrichtung generierten Steuerdruck lösbar, wobei mindestens eine weitere Radbremseinrichtung zur Lagefixierung des Fahrzeugs betätigt ist, wobei die mindestens eine weitere Radbremseinrichtung mithilfe eines weiterhin entlüfteten Federspeicheraktuators und/oder eines Druck beaufschlagten Betriebsbremsaktuators zugespannt ist.

Dadurch sind bei eingelegter Feststellbremse die Radbremseinrichtungen gegenüber dem Stand der Technik an einzelnen Achsen des Fahrzeugs stufenlos oder stufenweise lösbar, um ein Verspannen des Fahrzeuges bei einer Niveauverstellung zu verhindern, ohne die gesamte Feststellbremsung aufzuheben. Das Lösen der Federspeicheraktuatoren wird vorzugsweise durch ein Signal des Steuergeräts für die Luftfederung bei einer Niveauverstellung initiiert. Im Fahrbetrieb sind die Federspeicheraktuatoren als Hilfs-, Not- oder Zusatzbremsen jederzeit verfügbar, so dass die Bremswirkung und Fahrzeugstabilität beim Bremsen verbessert wird und optimal einstellbar ist. Dadurch erhöht sich die Verkehrssicherheit des Fahrzeugs bei weiterhin ermöglichtem Lösen der Federspeicheraktuatoren an definierten Achsen während der Niveauverstellung wesentlich.

Als Betriebsbremsbetätigungseinrichtung kann ein Fußbremsventil, ein Relaisventil oder ein sonstiges Ventil der Betriebsbremse und/oder ein elektro-pneumatischer Modulator eines elektronischen Bremssystems dienen.

Als Feststellbremsbetätigungseinrichtung kommt ein Handbremsventil, ein Relaisventil der Feststellbremsanlage oder ein Druckmodulator einer elektro-pneumatischen Feststellbremse in Frage.

Vorzugsweise ist den Vorder- und Hinterrädern der Achsen des Fahrzeugs jeweils mindestens eine Radbremseinrichtung zugeordnet, wobei die Federspeicheraktuatoren zumindest einer der Achsen unabhängig von den Federspeicheraktuatoren mindestens einer weiteren Achse des Fahrzeugs lösbar sind.

Die Bremsung der zumindest einen nicht zu lösenden Radbremseinrichtung kann mittels des Federspeicheraktuators erfolgen.

Bei einem alternativen Ausführungsbeispiel der Erfindung erfolgt die Bremsung der nicht zu lösenden Radbremseinrichtung mittels einer Betätigung der Betriebsbremsaktuatoren.

Erfindungsgemäß ist zwischen Steuerdruckquelle, Feststellbremskreis und den zu lösenden Federspeicheraktuatoren eine Wechselventileinrichtung derart angeordnet, dass die zu lösenden Federspeicheraktuatoren mit dem höheren der beiden Drücke aus der Steuerdruckquelle und dem Feststellbremskreis beaufschlagt sind. Mittels des beispielsweise pneumatischen Steuerdrucks können die Federspeicheraktuatoren der zu lösenden Achsen teilweise oder vollständig in Abhängigkeit des Drucks der Steuerdruckquelle entlastet werden.

Wird keine Niveauverstellung ausgeführt, entlüftet die Feststellbremsbetätigungseinrichtung zur Betätigung der Federspeicheraktuatoren den Feststellbremskreis wobei gleichzeitig kein Druck aus der Steuerdruckquelle an der Wechselventileinrichtung anliegt.

Als Steuerdruckquelle kommen Teile der Betriebsbremsanlage, beispielsweise eine Betriebsbremsbetätigungseinrichtung, ein ASR-Ventil oder ein speziell zu diesem Zweck installiertes, zusätzliches Schalt- oder Regelventil in Frage.

Um eine ungewünschte Addition der über die Betriebsbremsaktuatoren und die Federspeicheraktuatoren aufgebrachten Zuspannkräfte zu verhindern, kann im Strömungspfad zwischen der Feststellbremsbetätigungseinrichtung und den Federspeicheraktuatoren ein Überlastschutzrelaisventil angeordnet sein, das zusätzlich vom Druck eines Betriebsbremskreises beaufschlagt ist und bereits eine Wechselventileinrichtung darstellt. Der Steuerdruck zum Lösen der Federspeicheraktuatoren zumindest einer Achse kann dann durch die Betriebsbremsbetätigungseinrichtung aufgebracht werden.

Bei Aufbringen von Druck mittels der Betriebsbremsbetätigungseinrichtungen, ohne die Aktivierung der ABS-Ventile, werden alle Radbremseinrichtungen des Fahrzeugs durch die Betriebsbremsaktuatoren betätigt.

Ist dabei die Feststellbremse eingelegt, so werden die Federspeicheraktuatoren in etwa in dem Maße gelöst, in dem die Betriebsbremsaktuatoren Zuspannkraft aufbauen, sodass die Zuspannkraft insgesamt einen kritischen Wert nicht übersteigt, jedoch alle Räder gebremst sind.

In diesem Fall ist einem der Betriebsbremskreise zumindest ein ABS-Ventil zugeordnet, das im Strömungspfad zwischen der Betriebsbremsbetätigungseinrichtung und den Betriebsbremsaktuatoren angeordnet ist.

Das zumindest eine ABS-Ventil wird während der Niveauverstellung bei gleichzeitiger Betätigung der Betriebsbremsbetätigungseinrichtung, beispielsweise durch Betätigung eines Fußbremspedals, in die Entlüftestellung geschaltet. Somit werden über das Relaisventil mit Überlastschutzfunktion die Federspeicheraktuatoren geöffnet, während die nicht durch das zumindest eine ABS-Ventil entlüfteten Betriebsbremsaktuatoren das Fahrzeug am Wegrollen hindern.

In einer anderen Variante der Erfindung wird der Steuerdruck zum Lösen der Federspeicheraktuatoren zumindest einer Achse mittels zumindest eines ASR-Ventils aufgebracht. Bei Bremsanlagen mit ASR können die Betriebsbremsaktuatoren mindestens einer angetriebenen Achse durch Bestromen des mindestens einen ASR-Ventils mit Druck beaufschlagt werden. Dieses kann durch ein Steuersignal eines elektronischen Steuergeräts (ECU) angesteuert sein.

Dazu ist das mindestens eine ASR-Ventil mit einem ersten Anschluss einer ersten Wechselventileinrichtung verbunden, deren zweiter Anschluss mit der Betriebsbremsbetätigungseinrichtung und deren dritter Anschluss unmittelbar oder mittelbar, beispielsweise über ein Relaisventil zur Betätigung mindestens eines Betriebsbremsaktuators sowie einer weiteren Wechselventileinrichtung, beispielsweise einem Relaisventil mit Überlastschutzfunktion oder einem Wechselventil verbunden ist.

Die weitere Wechselventileinrichtung ist weiterhin mit der Feststellbremsbetätigungseinrichtung sowie unmittelbar oder mittelbar, beispielsweise über ein Relaisventil mit den zu lösenden Federspeicheraktuatoren verbunden.

Das zumindest eine ASR-Ventil wird während der Niveauverstellung angesteuert und druckbeaufschlagt über die erste Wechselventileinrichtung die Betriebsbremsaktuatoren der Antriebsachse sowie über die zweite Wechselventileinrichtung die zu lösenden Federspeicheraktuatoren zumindest einer anderen Achse.

Dadurch werden nur die Radbremseinrichtungen der zumindest einen Antriebsachse zugespannt während die Radbremseinrichtungen der anderen Achsen gelöst sind.

Bei einem Fahrzeug mit elektronischen Bremssystem (EBS) und ABS-Ventilen kann die Wechselventileinrichtung mit jedem Druckregelmodul verbunden werden, das über ein ABS-Ventil von den Betriebsbremsaktuatoren trennbar ist. Bei dieser erfindungsgemäßen Ausbildung der Bremsanordnung wird der Steuerdruck zum Lösen der Federspeicheraktuatoren zumindest einer Achse vorzugsweise mittels eines Druckregelmoduls des elektronischen Bremssystems (EBS) aufgebracht.

Das Druckregelmodul kann mit einem ersten Anschluss einer Wechselventileinrichtung verbunden sein, deren zweiter Anschluss unmittelbar oder mittelbar über ein Relaisventil mit den zu lösenden Federspeicheraktuatoren und deren dritter Anschluss unmittelbar oder über ein Relaisventil mit der Feststellbremsbetätigungseinrichtung zur Betätigung der Federspeicheraktuatoren verbunden ist. Das Druckregelmodul ist ferner über mindestens ein ABS-Ventil mit mindestens einem Betriebsbremsaktuator verbunden.

Vorzugsweise ist der von dem Druckregelmodul aufgebrachte Druck mittels des zumindest einen ABS-Ventils von dem mindestens einen Betriebsbremsaktuator entkoppelbar.

Das Druckregelmodul wird während der Niveauverstellung angesteuert und druckbeaufschlagt über die Wechselventileinrichtung die zu lösenden Federspeicheraktuatoren. Gleichzeitig wird das zumindest eine ABS-Ventil angesteuert, sodass der zumindest eine Betriebsbremsaktuator drucklos bleibt.

Bei einem elektronischen Bremssystem ohne ABS-Ventile ist die Wechselventileinrichtung vorzugsweise mit dem Druckregelmodul der Achse, die nicht gelöst werden soll oder die keine Federspeicheraktuatoren aufweist, verbunden.

Ein erfindungsgemäßes Fahrzeug verwendet eine Bremsanordnung mit einer Radbremseinrichtung, die einen Betriebsbremsaktuator und einen Federspeicheraktuator aufweist, wobei der Betriebsbremsaktuator und der Federspeicheraktuator mittels einer Betriebsbremsbetätigungseinrichtung und einer Feststellbremsbetätigungseinrichtung betätigbar sind. Der Federspeicheraktuator zumindest einer Radbremseinrichtung ist mittels einem von der Steuerdruckquelle aufgebrachten Steuerdruck lösbar, wobei mindestens eine weitere Radbremseinrichtung zur Lagefixierung des Fahrzeugs betätigt ist.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 ein Schaltbild einer Bremsanordnung gemäß einem ersten Ausführungsbeispiel, das nicht zur Erfindung gehört, mit einer zusätzlichen Steuerdruckquelle;
Figur 2 ein Schaltbild einer erfindungsgemäßen Bremsanordnung gemäß einem Ausführungsbeispiel der Erfindung bei der ein Steuerdruck mittels der Betriebsbremsbetätigungseinrichtung aufgebracht wird;
Figur 3 ein Schaltbild einer Variante einer erfindungsgemäßen Bremsanordnung;
Figur 4 ein Schaltbild einer Bremsanordnung gemäß einem Ausführungsbeispiel mit ABS-Ventilen und einem Überlastschutz-Relaisventil;
Figur 5 ein Schaltbild einer Bremsanordnung bei der das Lösen der Federspeicheraktuatoren mittels eines ASR-Ventils erfolgt;
Figur 6 ein Schaltbild einer Bremsanordnung bei der mittels eines Druckregelmoduls ein Steuerdruck zum Lösen der Federspeicheraktuatoren aufgebracht wird und
Figur 7 ein Schaltbild einer Bremsanordnung mit einem elektronischen Bremssystem ohne ABS-Ventile.

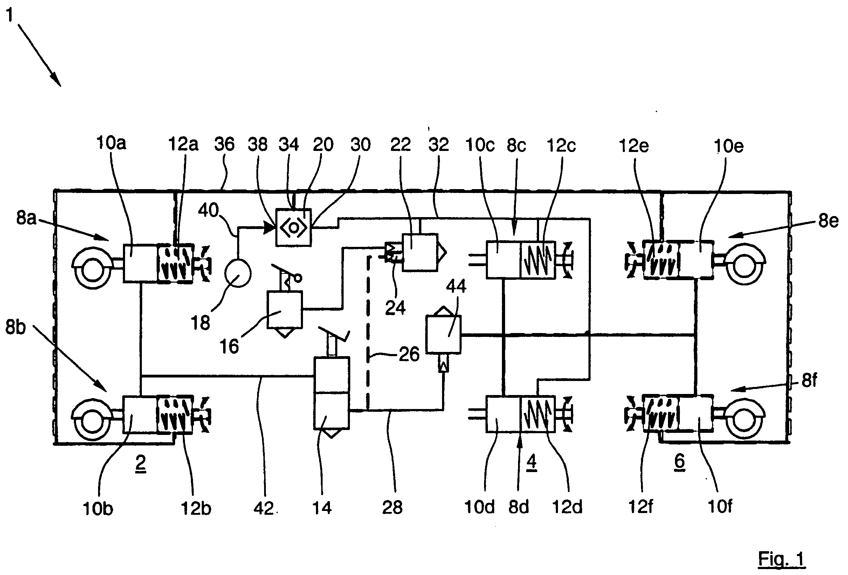

Figur 1 zeigt ein Schaltbild einer Bremsanordnung 1 für ein Nutzfahrzeug, beispielsweise einen Lastkraftwagen, bei dem Vorder- und Hinterräder der Achsen 2, 4, 6 jeweils eine Radbremseinrichtung 8a bis 8f zugeordnet ist, die einen Betriebsbremsaktuator 10a bis 10f und einen Federspeicheraktuator 12a bis 12f aufweist. Die Betriebsbremsaktuatoren 10a bis 10f sind mittels einer Betriebsbremsbetätigungseinrichtung 14 und die Federspeicheraktuatoren 12a bis 12f mittels einer Feststellbremsbetätigungseinrichtung 16, beispielsweise einer Handbremse, betätigbar. Die Federspeicheraktuatoren einzelner Achsen sind unabhängig von den Federspeicheraktuatoren weiterer Achsen des Fahrzeugs mittels eines Steuerdrucks lösbar. Bei dem dargestellten Ausführungsbeispiel sind die Federspeicheraktuatoren 12a, 12b der Vorderachse 2 und die Federspeicheraktuatoren 12e, 12f der hinteren Hinterachse 6 unabhängig von den Federspeicheraktuatoren 12c, 12d der vorderen Hinterachse 4 des Fahrzeugs mittels des Steuerdrucks lösbar. Die Federspeicheraktuatoren 12a, 12b; 12e, 12f sind an der Vorderachse 2 und der hinteren Hinterachse 6 stufenlos oder stufenweise lösbar, um ein Verspannen des Fahrzeuges, beispielsweise bei einer Niveauverstellung mittels einer Luftfederung oder der Beladung, zu verhindern, ohne die gesamte Feststellbremsung aufzuheben. Die Federspeicheraktuatoren 12c, 12d bleiben aktiviert, so dass eine ungewünschte Fahrzeugbewegung verhindert ist. Im Fahrbetrieb sind die Federspeicheraktuatoren 12a bis 12f durch Druckentlastung mittels der Feststellbremsbetätigungseinrichtung 16 als Hilfs-, Not- oder Zusatzbremse jederzeit verfügbar, so dass die Bremswirkung und Fahrzeugstabilität beim Bremsen verbessert wird und optimal einstellbar ist. Dadurch erhöht sich die Verkehrssicherheit des Fahrzeugs bei weiterhin ermöglichtem Lösen der Feststellbremse an definierten Achsen wesentlich.

Gemäß Figur 1 wird der Steuerdruck (Hilfsdruck) mittels einer Steuerdruckquelle 18 auf die zu lösenden Federspeicheraktuatoren 12a, 12b; 12e, 12f der Vorderachse 2 und der hinteren Hinterachse 6 aufgebracht. Hierzu ist zwischen der Steuerdruckquelle 18 und den zu lösenden Federspeicheraktuatoren 12a, 12b; 12e, 12f eine Wechselventileinrichtung 20 derart angeordnet, dass die Verbindung der Steuerdruckquelle 18 zu den nicht zu lösenden Federspeicheraktuatoren 12c, 12d der vorderen Hinterachse 4 unterbrechbar ist. Zur Betätigung der Federspeicheraktuatoren 12a bis 12f, beispielsweise um eine Parkbremsfunktion zu erreichen, ist die Feststellbremsbetätigungseinrichtung 16 über die Wechselventileinrichtung 20 in Abhängigkeit des Steuerdrucks der Steuerdruckquelle 18 mit den Federspeicheraktuatoren 12a bis 12f verbindbar. Um eine ungewünschte Addition der über die Betriebsbremsbetätigungseinrichtung 14 und die Feststellbremsbetätigungseinrichtung 16 aufgebrachten Bremskräfte zu verhindern, ist im Strömungspfad zwischen der Feststellbremsbetätigungseinrichtung 16 und der Wechselventileinrichtung 20 ein Überlastschutz-Relaisventil 22 angeordnet. Ein Steueranschluss 24 des Überlastschutz-Relaisventils 22 ist über eine Verbindungsleitung 26 mit einer Druckleitung 28 der Betriebsbremsbetätigungseinrichtung 14 verbunden. Für die Hilfs- und Feststellbremse wirkt das Überlastschutz-Relaisventils 22 als Relaisventil, indem es von der Feststellbremsbetätigungseinrichtung 16 angesteuert wird und die Federspeicheraktuatoren 12a bis 12f direkt aus einem nicht dargestellten Druckluftbehälter, proportional zum Eingangsteuerdruck, belüftet bzw. über eine Entlüftung entlüftet. Ein erster Anschluss 30 der Wechselventileinrichtung 20 ist über eine Versorgungsleitung 32 mit dem Überlastschutz-Relaisventil 22 und ein zweiter Anschluss 34 über eine Leitung 36 mit den zu lösenden Federspeicheraktuatoren 12a, 12b der Vorderachse 2 sowie den zu lösenden Federspeicheraktuatoren 12e, 12f der hinteren Hinterachse 6 verbunden. Ein Steueranschluss 38 der Wechselventileinrichtungs 20 ist über eine Steuerleitung 40 mit der Steuerdruckquelle 18 verbunden. Mittels eines pneumatischen Steuerdrucks können die Federspeicheraktuatoren 12a, 12b; 12e, 12f der zu lösenden Achsen 2, 6 teilweise oder vollständig in Abhängigkeit des Drucks der Steuerdruckquelle 18 entlastet werden. Der prozentuale Grad des Lösens der Federspeicheraktuatoren 12a, 12b; 12e, 12f wird durch den höheren der beiden Drücke aus Steuerdruckquelle 18 und Feststellbremskreis bestimmt. Die Betriebsbremsbetätigungseinrichtung 14 ist über eine Druckleitung 42 mit den Betriebsbremsaktuatoren 10a, 10b der Vorderachse 2 verbunden. In der zur Versorgung der Betriebsbremsaktuatoren 10c bis 10f der Hinterachsen 4, 6 vorgesehene Druckleitung 28 ist zwischen der Betriebsbremsbetätigungseinrichtung 14 und den Betriebsbremsaktuatoren 10c bis 10f ein Relaisventil 44 zum schnellen Druckauf- bzw. Druckabbau in den Hinterachsbremsen angeordnet.

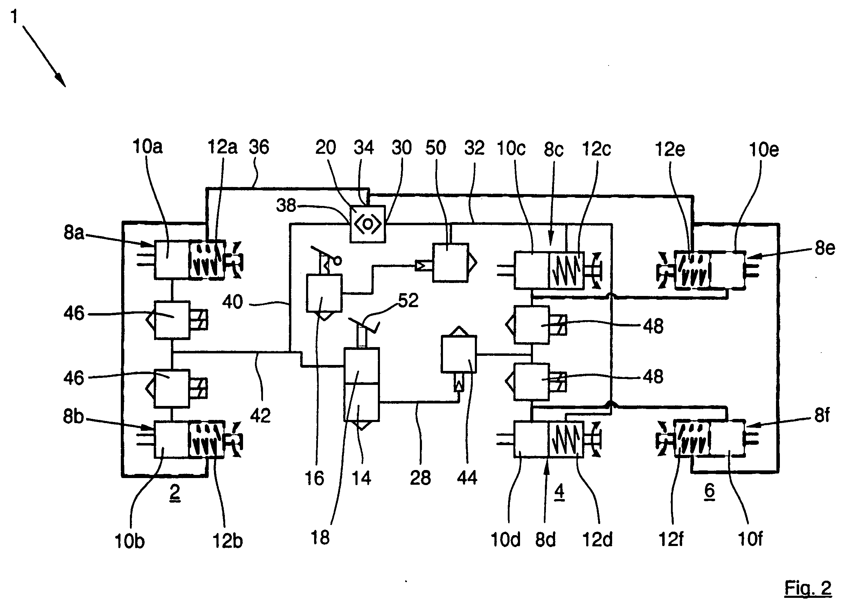

Wie Figur 2 zu entnehmen ist, die ein Schaltbild einer Ausführungsform einer erfindungsgemäßen Bremsanordnung 1 zeigt, wird der Steuerdruck zum Lösen der Federspeicheraktuatoren 12a, 12b der Vorderachse 2 und der Federspeicheraktuatoren 12e, 12f der hinteren Hinterachse 6 bei dieser Variante durch die Betriebsbremsbetätigungseinrichtung 14 aufgebracht. Den Federspeicheraktuatoren 12a, 12b der Vorderachse 2 ist jeweils ein ABS-Ventil 46 zugeordnet. Die Radbremseinrichtungen 8 der Hinterachsen 4, 6 sind seitenweise mit gemeinsamen ABS-Ventilen 48 ausgerüstet. Die der Vorderachse 2 zugeordneten ABS-Ventile 46 sind jeweils im Strömungspfad zwischen der Betriebsbremsbetätigungseinrichtung 14 und den Betriebsbremsaktuatoren 10a, 10b angeordnet. Die Betriebsbremsbetätigungseinrichtung 14 ist über die Druckleitung 42 und die zwischengeschalteten ABS-Ventile 46 mit den Betriebsbremsaktuatoren 10a, 10b der Vorderachse 2 und über die Druckleitung 28 und das zwischengeschaltete Relaisventil 44 sowie die ABS-Ventile 48 mit den Betriebsbremsaktuatoren 10c bis 10f der beiden Hinterachsen 4, 6 verbunden. Ferner ist die Betriebsbremseinrichtung 14 über die Steuerleitung 40 mit dem Steueranschluss 38 der Wechselventileinrichtungs 20 verbunden. Die Wechselventileinrichtung 20 ist durch den mittels der Betriebsbremsbetätigungseinrichtung 14 aufgebrachten Druck in eine Arbeitsposition betätigbar, in der die Federspeicheraktuatoren 12a, 12b; 12e, 12f der zu öffnenden Achsen 2, 6 gelöst sind. Bei dieser Variante kann der die Wechselventileinrichtung 20 beaufschlagende Betriebsbremsdruck die Federspeicheraktuatoren 12a, 12b; 12e, 12f entlasten, während die Betriebsbremsaktuatoren 10 mittels der ABS-Ventile 46 getrennt von der Betriebsbremsbetätigungseinrichtung 14 in drucklosem Zustand bleiben. Der Anschluss 30 der Wechselventileinrichtungs 20 ist über ein Relaisventil 50 mit der Feststellbremsbetätigungseinrichtung 16 verbunden. Der Steueranschluss 38 ist über die Steuerleitung 40 mit der Betriebsbremsbetätigungseinrichtung 14 und der Anschluss 34 mit den zu lösenden Federspeicheraktuatoren 12a, 12b; 12e, 12f verbunden. Bei Aufbringen von Druck mittels der Betriebsbremsbetätigungseinrichtung 14, ohne die Aktivierung der ABS-Ventile 46, 48, wird der Überlastschutz, insbesondere für die Achsen 2, 6 des Fahrzeugs erreicht, die über die Wechselventileinrichtung 20 mit der Betriebsbremsbetätigungseinrichtung 14 verbunden sind. Bei einem ABS-System ist die zusätzliche Wechselventileinrichtung 20 lediglich erforderlich, wenn das Relaisventil 50, wie dargestellt, keine Überlastschutzfunktion aufweist. Die ABS-Ventile 46, 48 sind während des Lösens der Federspeicheraktuatoren, auch bei Betätigung der Betriebsbremsbetätigungseinrichtung 14, insbesondere mittels einem Fußbremspedal 52 geschlossen, so dass kein Druck in die Betriebsbremsaktuatoren 10a, 10b, 10c, 10d, 10e und 10f gelangt und das Fahrzeug somit nur von den Federspeicheraktuatoren 12c und 12f am Wegrollen gehindert wird, während die anderen Räder frei drehen können.

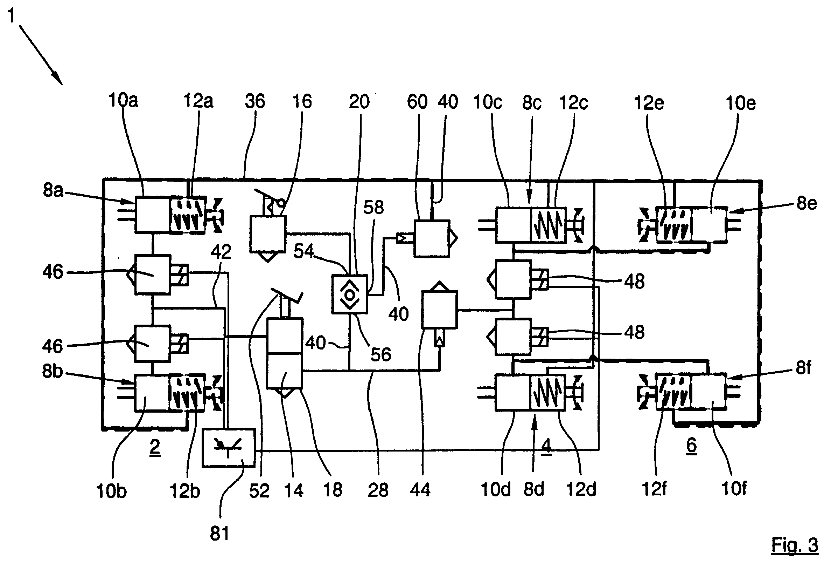

Figur 3 zeigt eine Variante einer Bremsanordnung 1, die sich von der in Figur 2 dargestellten Ausführungsform im Wesentlichen dadurch unterscheidet, dass ein Anschluss 54 der Wechselventileinrichtung, hier eines Wechselventils, 20 mit der Feststellbremsbetätigungseinrichtung 16, ein zweiter Anschluss 56 mit der Betriebsbremsbetätigungseinrichtung 14 und ein dritter Anschluss 58 über ein Relaisventil 60 mit den Federspeicheraktuatorenen 12a bis 12f verbunden ist. Diese Bremsanordnung hat den Vorteil, dass für jede der Achsen 2, 4, 6 ein Überlastschutz erreicht wird, da durch die Wechselventileinrichtung 20 eine Addition der Zuspannkraft der Radbremseinrichtungen durch gleichzeitig druckbeaufschlagte Betriebsbremsaktuatoren und drucklose Federspeicheraktuatoren verhindert ist. Soll eine Nieveauveränderung stattfinden, so steuert die Betriebsbremsbetätigungseinrichtung 14 durch Betätigung des Fußbremspedals 52 einen Steuerdruck aus, wodurch über die Wechselventileinrichtung 58 und das Relaisventil 60 die Federspeicheraktuatoren 12a bis 12f gelöst werden. Die ABS-Ventile 48 der Hinterachsen 4, 6 sind dabei geschlossen, so dass die Betriebsbremsaktuatoren 10d bis 10f der Hinterachsen 4, 6 nicht druckbeaufschlagt sind. Somit sind alle Räder der Hinterachsen 4, 6 ungebremst. Die ABS-Ventile 46 der Vorderachse 2 bleiben in Durchgangsstellung, so dass die Betriebsbremsaktuatoren 10a, 10b der Radbremseinrichtungen 8a, 8b der Vorderachse 2 zugespannt sind und das Fahrzeug am Wegrollen hindern.

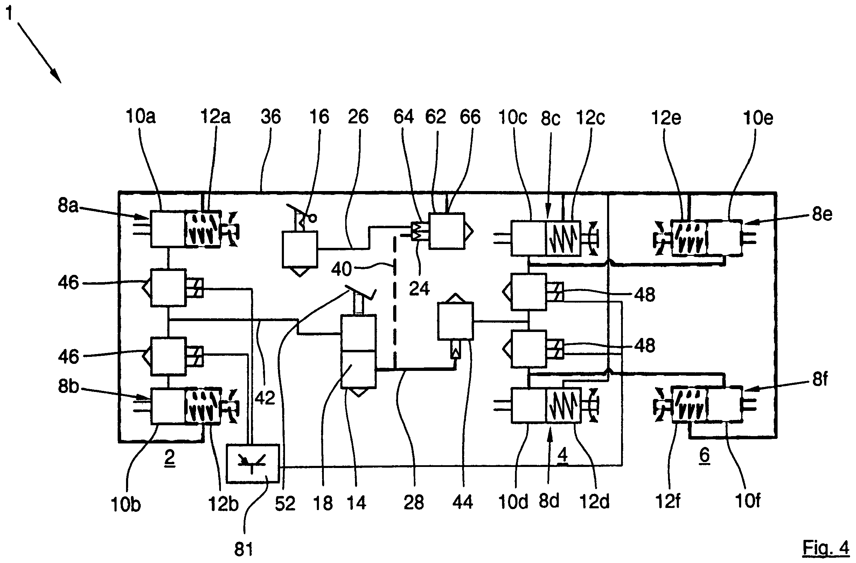

Die Figur 4 zeigt ein Ausführungsbeispiel der Erfindung, deren Funktionsweise mit der aus Figur 3 identisch ist. Lediglich sind die Funktionen des Wechselventil und des Relaisventil in der Baueinheit Überlastschutz-Relaisventil 62 zusammengefasst, das somit die Wechselventileinrichtung darstellt. Das Überlastschutz-Relaisventil 62 hat einen über die Verbindungsleitung 26 mit der Betriebsbremsbetätigungseinrichtung 14 verbundenen Anschluss 24, einen mit der Feststellbremsbetätigungseinrichtung 16 verbundenen Anschluss 64 und einen über die Leitung 36 mit den Federspeicheraktuatoren 12a bis 12f verbundenen Anschluss 66.

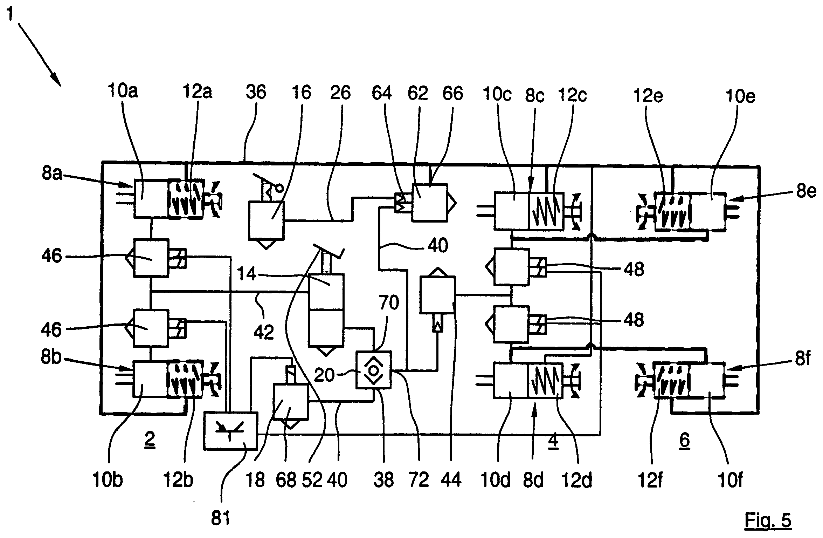

Gemäß Figur 5 kann die manuelle Betätigung des Fußbremspedals 52 zur Aufbringung des Steuerdrucks durch ein ASR-Ventil 68 ersetzt werden. Der Steuerdruck zum Lösen der Federspeicheraktuatorenen 12a bis 12f kann durch ein Steuersignal eines elektronischen Steuergeräts (ECU) zum Lösen der Federspeicheraktuatoren 12a bis 12f angesteuert sein. Das ASR-Ventil 68 ist über die Steuerleitung 40 mit dem Steueranschluss 38 der Wechselventileinrichtung 20 verbunden, deren zweiter Anschluss 70 mit der Betriebsbremsbetätigungseinrichtung 14 und deren dritter Anschluss 72 über die Verbindungsleitung 26 mit dem Überlastschutz-Relaisventil 62 und über die Druckleitung mit dem Relaisventil 44 zur Betätigung der Betriebsbremsen 10c, 10d, 10e, 10f verbunden ist. Ist das ASR-Ventil angesteuert, so sind die Federspeicheraktuatorenen 12a bis 12f durch das Überlastschutz-Relaisventil 62 gelöst und gleichzeitig die Betriebsbremsaktuatoren 10d bis 10f zugespannt, so dass das Fahrzeug am Wegrollen gehindert ist. Die Räder der Vorderachse 2 können frei drehen. Bei vielen Fahrzeugen ist dies ausreichend um eine hinreichend verspannungsfreie Niveauregulierung zu ermöglichen.

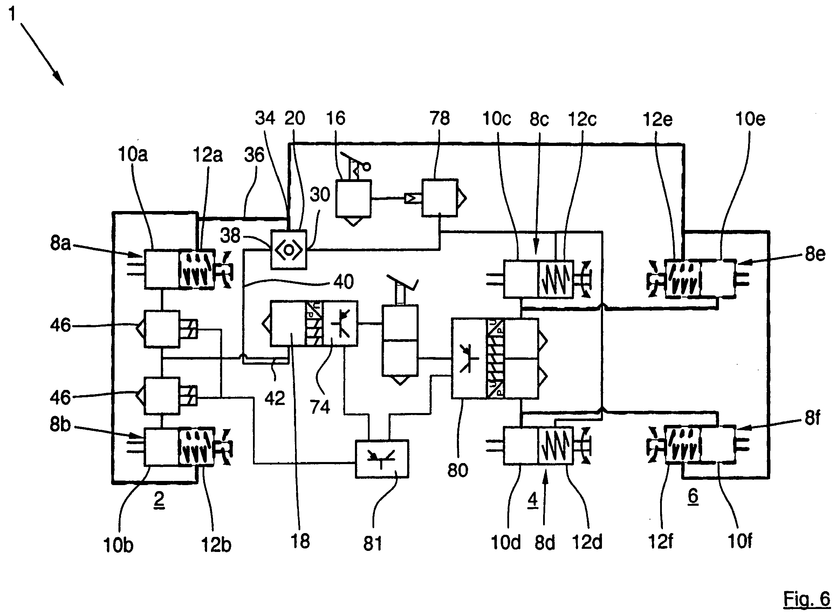

Bei einer in Figur 6 dargestellten Bremsanordnung 1 wird der Steuerdruck zum Lösen der Federspeicheraktuatoren 12a, 12b, 12e, 12f mittels eines Druckregelmoduls 74 eines elektronischen Bremssystems (EBS) aufgebracht. Bei einem elektronischen Bremssystem mit ABS-Ventilen 46 kann die Wechselventileinrichtung 20 mit jedem Druckregelmodul 74 verbunden werden, das über mindestens ein ABS-Ventil 46 von den Betriebsbremsaktuatoren 10a, 10b trennbar ist. Das Druckregelmodul 74 ist gemäß Figur 6 über die Steuerleitung 40 mit dem Steueranschluss 38 der Wechselventileinrichtungs 20 verbunden, dessen zweiter Anschluss 34 mit den zu lösenden Federspeicheraktuatoren 12a, 12b, 12e, 12f und dessen dritter Anschluss 30 über ein Relaisventil 78 mit der Feststellbremsbetätigungseinrichtung 16 verbunden ist. Das Druckregelmodul 74, bildet hier die Betriebsbremsbetätigungseinrichtung. Die ABS-Ventile 46 sind zwischen Druckregelmodul 74 und den vorderen Betriebsbremsaktuatoren 10a, 10b angeordnet. Der von dem Druckregelmodul 74 aufgebrachte Druck ist mittels der ABS-Ventile 46 von den Betriebsbremsaktuatoren 10a, 10b entkoppelbar. Den Betriebsbremsaktuatoren 10c, 10d, 10e, 10f ist ein weiteres Druckregelmodul 80 für die Betätigung der Radbremseinrichtungen der Hinterachsbremsen vorgesehen.

Ist während einer Niveauverstellung die Feststellbremse eingelegt, so wird das Druckregelmodul 74 vom zugeordneten elektronischen Steuergerät 81 (ECU) veranlasst, einen Druck auszusteuem. Dieser wird als Steuerdruck über die Steuerleitung 40, die Wechselventileinrichtung 20 sowie die Leitungen 36 an die Federspeicheraktuatoren 12a, 12b, 12e und 12f geleitet, sodass diese lösen. Gleichzeitig werden vom elektronischen Steuergerät 81 die ABS-Ventile 46 der Vorderachse 2 geschlossen und somit die Betriebsbremsaktuatoren 10a, 10b vom ausgesteuerten Druck des Druckregelmoduls 74 entkoppelt. Das Fahrzeug wird dabei durch die Federspeicheraktuatoren 12c und 12d der ersten Hinterachse 4 im Stand gehalten.

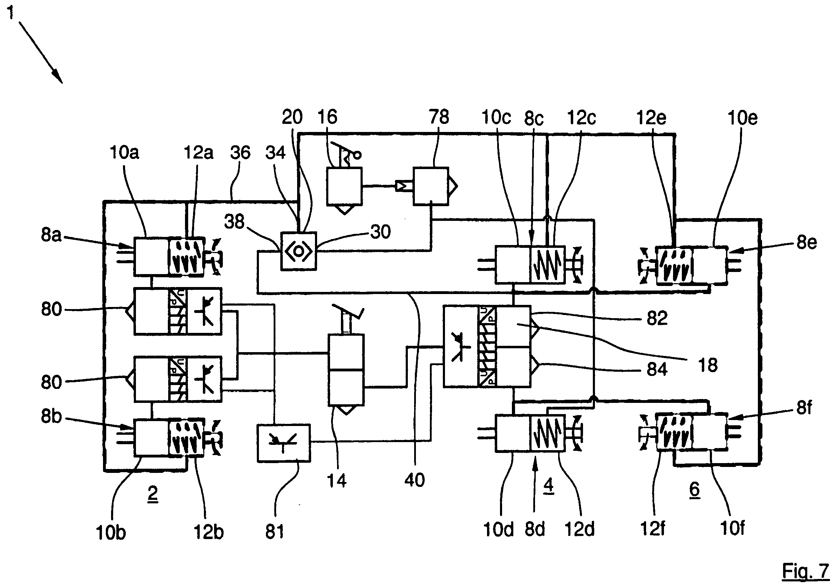

Wie Figur 7 zu entnehmen ist, die eine Bremsanordnung 1 mit einem elektronischen Bremssystem ohne ABS-Ventile zeigt, ist die Wechselventileinrichtung 20 bei dieser Variante mit einem Kanal des Druckregelmoduls 82 der Achse, die nicht gelöst werden soll, d.h. der vorderen Hinterachse 4 verbunden. Der Steuerdruck zum Lösen der Federspeicheraktuatoren 12a, 12b, 12e, 12f der Vorderachse 2 und der hinteren Hinterachse 6 wird mittels dem der vorderen Hinterachse 4 zugeordneten Druckregelmodul 82 des elektronischen Bremssystems aufgebracht. Da der dem als Steuerdruckquelle dienende Kanal des Druckregelmoduls auch den Betriebsbremsaktuator 10c der zugeordneten Radbremseinrichtung 8c zuspannt, ist auch der Federspeicheraktuator 12c der Radbremseinrichtung 8c mit dem Steuerdruck beaufschlagt, um eine Überlastung zu vermeiden. Der Kanal des Druckregelmoduls 82 ist über die Steuerleitung 40 mit dem Steueranschluss 38 der Wechselventileinrichtung 20 verbunden, dessen zweiter Anschluss 34 ist mit den zu lösenden Federspeicheraktuatoren 12a, 12b, 12c, 12e, 12f und dessen dritter Anschluss 30 ist über das Relaisventil 78 mit der Feststellbremsbetätigungseinrichtung 16 verbunden. Die Feststellbremsbetätigungseinrichtung 16 beaufschlagt über das Relaisventil 78 den Federspeicheraktuator 12d der vorderen Hinterachse 4 und über die Wechselventileinrichtung 20 die Federspeicheraktuatoren 12a, 12b der Vorderachse 2, die Federspeicheraktuatore 12c der vorderen Hinterachse 4 und die Federspeicheraktuatoren 12e, 12f der hinteren Hinterachse 6. Der als Steuerdruckquelle dienende Kanal des Druckregelmoduls 82 ist ferner mit den Betriebsbremsaktuatoren 10c, 10e der in Figur 7 oberen Radbremseinrichtungen 8c, 8e verbunden, so dass diese geschlossen sind. Die Betriebsbremse 10d der unteren Radbremseinrichtung ist mittels des anderen Kanals des Druckregelmoduls 84 beaufschlagbar.

Die erfindungsgemäße Bremsanordnung 1 ist nicht auf die beschriebenen Ausführungsbeispiele eines dreiachsigen Lastkraftwagens beschränkt, vielmehr kann die Bremsanordnung bei einer Vielzahl von aus dem Stand der Technik bekannten Fahrzeugen Verwendung finden. Ferner ist die Erfindung nicht auf das Lösen der Federspeicheraktuatoren der Vorderachse und der hinteren Hinterachse beschränkt. Das Lösen einer oder mehrerer beliebiger Achsen eines Fahrzeugs ist mittels der erfindungsgemäßen Bremsanordnung möglich.

Offenbart ist eine Bremsanordnung für ein Fahrzeug, insbesondere für ein Nutzfahrzeug, mit zumindest einer Radbremseinrichtung 8a-8f, die einen Betriebsbremsaktuator 10a-10f und einen Federspeicheraktuator 12a-12f aufweist, wobei die Radbremseinrichtung 8a-8f, mittels einer Betriebsbremsbetätigungseinrichtung 14 und einer Feststellbremsbetätigungseinrichtung 16 betätigbar ist. Erfindungsgemäß ist zumindest der Federspeicheraktuator 12a, 12b; 12e, 12f einer Radbremseinrichtung 8a, 8b; 8e, 8f mittels eines von der Betriebsbremsbetätigungseinrichtung 14 aufgebrachten Steuerdrucks lösbar, wobei mindestens eine weitere Radbremseinrichtung 8c, 8d zur Lagefixierung des Fahrzeugs betätigt ist. Ferner offenbart ist ein Fahrzeug mit einer derartigen Bremsanordnung.

### Bezugszeichenliste

- 1: Bremsanordnung
- 2: Vorderachse
- 4: Hinterachse
- 6: Hinterachse
- 8: Radbremseinrichtung
- 10: Betriebsbremsaktuator
- 12: Federspeicheraktuator
- 14: Betriebsbremsbetätigungseinrichtung
- 16: Feststellbremsbetätigungseinrichtung
- 18: Steuerdruckquelle
- 20: Wechselventileinrichtung
- 22: Überlastschutz-Relaisventil
- 24: Steueranschluss
- 26: Verbindungsleitung
- 28: Druckleitung
- 30: erster Anschluss
- 32: Versorgungsleitung
- 34: zweiter Anschluss
- 36: Leitung
- 38: Steueranschluss
- 40: Steuerleitung
- 42: Druckleitung
- 44: Relaisventil
- 46: ABS-Ventil
- 48: ABS-Ventil
- 50: Relaisventil
- 52: Fußbremspedal
- 54: Anschluss
- 56: Anschluss
- 58: Anschluss
- 60: Relaisventil
- 62: Überlastschutz-Relaisventil
- 64: Anschluss
- 66: Anschluss
- 68: ASR-Ventil
- 70: Anschluss
- 72: Anschluss
- 74: Druckregelmodul
- 76: Verbindungsleitung
- 78: Relaisventil
- 80: Druckregelmodul
- 81: elektronisches Steuergerät (ECU)
- 82: Druckregelmodul
- 84: Druckregelmodul

## Patentansprüche

1. Bremsanordnung für ein Kraftfahrzeug mit mindestens zwei Achsen, insbesondere für ein Nutzfahrzeug, mit zumindest zwei Radbremseinrichtungen (8a-8f), die jeweils einen Betriebsbremsaktuator (10a-10f) und einen Federspeicheraktuator (12a-12f), der über eine Steuerdruckquelle (18) und eine Steuerleitung (40) lösbar ist, aufweisen, wobei an jeder der mindestens zwei Achsen mindestens jeweils eine Radbremseinrichtung (8a-8f) mittels einer Betriebsbremsbetätigungseinrichtung (14) und einer Feststellbremsbetätigungseinrichtung (16) betätigbar ist, wobei die Bremsanordnung eine Funktion zur Unterstützung der Niveauverstellung aufweist, mit der mindestens eine Radbremseinrichtung (8c, 8d; 8e, 8f) zur Lagefixierung des Kraftfahrzeugs mittels der Federkraft des dieser zugeordneten Federspeicheraktuators (12c, 12d) betätigbar ist, **dadurch gekennzeichnet, dass**
die Steuerdruckquelle (18) zum Lösen des Federspeicheraktuators (12a, 12b; 12e, 12f) zumindest einer weiteren Radbremseinrichtung (8a, 8b; 8e, 8f) ein Druckkreis der Betriebsbremsbetätigungseinrichtung (14) ist.

2. Bremsanordnung nach dem Patentanspruch 1, **dadurch gekennzeichnet, dass** der als Steuerdruckquelle (18) verwendete Druckkreis der Betriebsbremsbetätigungseinrichtung (14) ein ASR-Ventil (68) aufweist und/oder ein Druckregelmodul (74) eines elektronischen Bremssystems (EBS) ist.

3. Bremsanordnung nach Patentanspruch 1 oder 2, wobei der zumindest eine Federspeicheraktuator (12a, 12b; 12e, 12f) zumindest einer der Achsen (2, 6) unabhängig vom Federspeicheraktuator (12c, 12d) mindestens einer weiteren Achse (4) des Fahrzeugs mittels des Steuerdrucks lösbar ist.

4. Bremsanordnung nach einem der voranstehenden Patentansprüchen 1 bis 3, wobei mindestens einer der von der Betriebsbremsbetätigungseinrichtung (14) ausgesteuerten Drücke mittels mindestens eines ABS-Ventil (46,48) von mindestens einen, zugeordneten Betriebsbremsaktuator (10a, 10b) zurückgehalten wird.

5. Bremsanordnung nach einem der voranstehenden Patentansprüchen 1 bis 3, wobei mindestens einer der die von der Betriebsbremsbetätigungseinrichtung (14) ausgesteuerten Drücke mittels mindestens eines ABS-Ventils (46, 48) von allen zugeordneten Betriebsbremsaktuatoren (10a, 10b, 10c, 10d, 10e, 10f) zurückgehalten wird, wobei das Fahrzeug von mindestens einem Federspeicheraktuator (12c, 12d) am Wegrollen gehindert wird.

6. Bremsanordnung für ein Kraftfahrzeug mit mindestens zwei Achsen, insbesondere für ein Nutzfahrzeug, mit zumindest zwei Radbremseinrichtungen (8a-8f), die jeweils einen Betriebsbremsaktuator (10a-10f) und einen Federspeicheraktuator (12a-12f), der über eine Steuerdruckquelle (18) und eine Steuerleitung (40) lösbar ist, aufweisen, wobei an jeder der mindestens zwei Achsen mindestens jeweils eine Radbremseinrichtung (8a-8f) mittels einer Betriebsbremsbetätigungseinrichtung (14) und einer Feststellbremsbetätigungseinrichtung (16) mittels der Federspeicheraktuator (12a-12f) betätigbar ist, **dadurch gekennzeichnet, dass** die Bremsanordnung eine Funktion zur Unterstützung der Niveauverstellung aufweist, mit der
- die Federspeicheraktuatoren (12a, 12b; 12e, 12f) aller Radbremseinrichtungen (8a, 8b; 8e, 8f) mittels eines von einer Steuerdruckquelle (18) über eine Steuerleitung (40) von einem Druckkreis der Betriebsbremsbetätigungseinrichtung (14) aufgebrachten Steuerdrucks gelöst werden,
- mindestens eine Radbremseinrichtung (8c, 8d; 8e, 8f) zur Lagefixierung des Kraftfahrzeugs durch Betätigung des Betriebsbremsaktuators (10c-10f) erfolgt, wobei insbesondere zumindest ein Betriebsbremsaktuator (10a, 10b) mit der Betriebsbremsbetätigungseinrichtung (14) verbunden bleibt, so dass der zumindest eine Betriebsbremsaktuator (10a, 10b) das Fahrzeug am Wegrollen hindert.

7. Bremsanordnung nach Patentanspruch 6, wobei die Betätigung der Betriebsbremsbetätigungseinrichtung (14) auf mindestens einen Betriebsbremsaktuator mindestens einer Achse wirkt und gleichzeitig als Steuerdruckquelle der mindestens einen anderen Achse oder aller Achsen dient.

8. Bremsanordnung nach einem der vorhergehenden Patentansprüche, wobei die Betriebsbremsbetätigungseinrichtung (14) ein Fußbremsventil ist oder wobei insbesondere die Betriebsbremsbetätigungseinrichtung (14) mindestens aus einem Druckregelmodul (80, 82, 84) besteht.

9. Bremsanordnung nach einem der vorhergehenden Patentansprüche, wobei die Feststellbremsbetätigungseinrichtung (16) ein Handbremsventil ist oder wobei die Feststellbremsbetätigungseinrichtung (16) der Druckmodulator eines elektropneumatischen Parkbremssystems ist.

10. Bremsanordnung nach einem der vorhergehenden Patentansprüche, wobei ein erster Anschluss (30) einer Wechselventileinrichtung (20) mittelbar oder unmittelbar mit der Feststellbremsbetätigungseinrichtung (16), ein zweiter Anschluss (34) mit den zu lösenden Federspeicheraktuatoren (12a, 12b; 12e, 12f) und ein dritter Anschluss (38) mit der Steuerdruckquelle (18) derart verbunden ist, dass die zu lösenden Federspeicheraktuatoren (12a, 12b; 12e, 12f) mit dem höheren der beiden Drücke aus der Steuerdruckquelle (18) und der Feststellbremsbetätigungseinrichtung (16) beaufschlagbar sind.

11. Bremsanordnung nach Patentanspruch 10, wobei als Wechselventileinrichtung (20) ein Wechselventil dient oder wobei insbesondere als Wechselventileinrichtung (20) ein Überlastschutz-Relaisventil (22) dient.

12. Bremsanordnung nach Patentanspruch 11, wobei die Wechselventileinrichtung (20) durch den mittelbar oder unmittelbar über die Betriebsbremsbetätigungseinrichtung (14) aufgebrachten Druck in eine Arbeitsposition betätigbar ist, in der die Federspeicheraktuatoren (12a, 12b; 12e, 12f) der zumindest einen zu öffnenden Achse (2, 6) gelöst sind oder wobei die Wechselventileinrichtung (20) durch den mittelbar oder unmittelbar über das ASR-Ventil (68) aufgebrachten Druck in eine Arbeitsposition betätigbar ist, in der die Federspeicheraktuatoren (12a, 12b; 12e, 12f) der zumindest einen zu öffnenden Achse (2, 6) gelöst sind.

13. Bremsanordnung nach einem der vorhergehenden Patentansprüche, wobei ein Überlastschutz-Relaisventil (22, 62) vorgesehen ist, das einen über eine Verbindungsleitung (26) mit der Betriebsbremsbetätigungseinrichtung (14) verbundenen Anschluss (24), einen mit der Feststellbremsbetätigungseinrichtung (16) verbundenen Anschluss (64) und einen mit Federspeicheraktuatoren (12a-12f) verbundenen Anschluss (66) aufweist.

14. Bremsanordnung nach Patentanspruch 13, wobei der Steuerdruck zum Lösen der Federspeicheraktuatoren (12a, 12b; 12e, 12f) zumindest einer Achse (2; 6) mittelbar oder unmittelbar durch Betätigung der Betriebsbremsbetätigungseinrichtung (14) mittels des Überlastschutz-Relaisventils (22, 62) aufgebracht ist.

15. Bremsanordnung nach Patentanspruch 10, wobei das ASR-Ventil (68) mit einem Steueranschluss (38) einer weiteren Wechselventileinrichtung (20) verbunden ist, deren zweiter Anschluss (70) mit der Betriebsbremsbetätigungseinrichtung (14) und deren dritter Anschluss (72) mit einem Überlastschutz-Relaisventil (62) zum Lösen der Federspeicheraktuatoren (12a, 12b; 12e, 12f) und unmittelbar oder mittelbar über ein Relaisventil (44) mit mindestens einem Betriebsbremsaktuator (10c-10f) zumindest einer der Achsen (4, 6) verbunden ist.

16. Bremsanordnung nach Patentanspruch 10, wobei das Druckregelmodul (74) mit einem Steueranschluss (38) einer Wechselventileinrichtung (29) verbunden ist, deren zweiter Anschluss (34) unmittelbar oder über ein Relaisventil (78) mit den zu lösenden Federspeicheraktuatoren (12a, 12b; 12e, 12f) und deren dritter Anschluss (30) unmittelbar oder über ein Relaisventil (78) mit der Feststellbremsbetätigungseinrichtung (16) zur Betätigung der Federspeicheraktuatoren (12a-12f) verbunden ist.

17. Bremsanordnung nach einem der Patentansprüche 15 oder 16, wobei das Druckregelmodul (74) zwischen der Betriebsbremsbetätigungseinrichtung (14) und zumindest einem der Betriebsbremsaktuator (10a, 10b) zugeordnetem ABS-Ventil (46) so angeordnet ist, dass der von dem Druckregelmodul (74) aufgebrachte Druckvon dem zugeordneten Betriegsbremsaktuator (10a, 10b) entkoppelbar ist.

18. Bremsanordnung nach Patentanspruch 15, wobei die Wechselventileinrichtung (20) mit dem Druckregelmodul (82) der zumindest einen Achse (4), die nicht gelöst werden soll oder die keine Federspeicheraktuatoren (12a-12f) aufweist, verbunden ist.

## Claims

1. Brake system for a motor vehicle having at least two axles, in particular for a utility vehicle, having at least two wheel brake devices (8a-8f), which each comprise a service brake actuator (10a-10f) and a spring-type brake actuator (12a-12f) which can be released by way of a control pressure source (18) and a control line (40), it being possible, on each of the at least two axles, to actuate at least one wheel brake device (8a-8f) in each case by means of a service brake actuation device (14) and a parking brake actuation device (16), wherein the brake system has a function for supporting the ride height adjustment, with which at least one wheel brake device (8c, 8d; 8e, 8f) for immobilizing the motor vehicle can be actuated by means of the spring force of the spring-type brake actuator (12c, 12d) assigned to this device, **characterized in that** the control pressure source (18) for releasing he spring-type brake actuator (12a, 12b; 12e, 12f) of at least one further wheel brake device (8a, 8b; 8e, 8f) is a pressure circuit of the service brake actuation device (14).

2. Brake system according to Claim 1, **characterized in that** the pressure circuit of the service brake actuation device (14) which is used as a control pressure source (18) has an ASR valve (68) and/or is a pressure control module (74) of an electronic brake system (EBS).

3. Brake system according to Claim 1 or 2, wherein the at least one spring-type brake actuator (12a, 12b; 12e, 12f) of at least one of the axles (2, 6) can be released by means of the control pressure independently of the spring-type brake actuator (12c, 12d) of at least one further axle (4) of the vehicle.

4. Brake system according to one of the preceding Claims 1 to 3, wherein at least one of the pressures modulated by the service brake actuation device (14) is restrained by means of at least one ABS valve (46, 48) of at least one assigned service brake actuator (10a, 10b).

5. Brake system according to one of the preceding Claims 1 to 3, wherein at least one of the pressures modulated by the service brake actuation device (14) is restrained by means of at least one ABS valve (46, 48) of all assigned service brake actuators (10a, 10b, 10c, 10d, 10e, 10f), the vehicle being prevented from rolling away by at least one spring-type brake actuator (12c, 12d).

6. Brake system for a motor vehicle having at least two axles, in particular for a utility vehicle, having at least two wheel brake devices (8a-8f), which each comprise a service brake actuator (10a-10f) and a spring-type brake actuator (12a-12f) which can be released by way of a control pressure source (18) and a control line (40), it being possible, on each of the at least two axles, to actuate at least in each case one wheel brake device (8a-8f) by means of a service brake actuation device (14) and a parking brake actuation device (16), by means of the spring-type brake actuator (12a-12f), **characterized in that** the brake system has a function for assisting the level regulation, by way of which brake system
- the spring-type brake actuators (12a, 12b; 12e, 12f) of all wheel brake devices (8a, 8b; 8e, 8f) are released by means of a control pressure which is applied by a control pressure source (18) via a control line (40) from a pressure circuit of the service brake actuation device (14),
- at least one wheel brake device (8c, 8d; 8e, 8f) is actuated for fixing the position of the motor vehicle by way of actuation of the service brake actuator (10c-10f), wherein in particular at least one service brake actuator (10a, 10b) remains connected to the service brake actuation device (14), so that the at least one service brake actuator (10a, 10b) prevents the vehicle from rolling away.

7. Brake system according to Claim 6, wherein the actuation of the service brake actuation device (14) acts on at least one service brake actuator of at least one axle and at the same time serves as control pressure source of at least one other axle or all axles.

8. Brake system according to one of the preceding claims, wherein the service brake actuation device (14) is a footbrake valve or wherein in particular the service brake actuation device (14) comprises at least one pressure control module (80, 82, 84).

9. Brake system according to one of the preceding claims, wherein the parking brake actuation device (16) is a handbrake valve or wherein the parking brake actuation device (16) is the pressure modulator of an electro-pneumatic parking brake system.

10. Brake system according to one of the preceding claims, wherein a first connection (30) of a shuttle valve device (20) is connected indirectly or directly to the parking brake actuation device (16), a second connection (34) is connected to the spring-type brake actuators (12a, 12b; 12e, 12f) to be released and a third connection (38) is connected to the control pressure source (18), in such a way that the spring-type brake actuators (12a, 12b; 12e, 12f) to be released can be subjected to the higher of the two pressures from the control pressure source (18) and the parking brake actuation device (16).

11. Brake system according to Claim 10, wherein a shuttle valve serves as shuttle valve device (20) or wherein in particular an overload protection relay valve (22) serves as shuttle valve device (20).

12. Brake system according to Claim 11, wherein the shuttle valve device (20) can be brought by the pressure applied indirectly or directly via the service brake actuation device (14) into a working position in which the spring-type brake actuators (12a, 12b; 12e, 12f) of at least one axle (2, 6) to be opened are released or wherein the shuttle valve device (20) can be brought by the pressure applied indirectly or directly via the ASR valve (68) into a working position in which the spring-type brake actuators (12a, 12b; 12e, 12f) of at least one axle (2, 6) to be opened are released.

13. Brake system according to one of the preceding claims, wherein an overload protection relay valve (22, 62) is provided, which has a connection (24) connected to the service brake actuation device (14) via a connecting line (26), a connection (64) connected to the parking brake actuation device (16) and a connection (66) connected to the spring-type brake actuators (12a-12f).

14. Brake system according to Claim 13, wherein the control pressure for releasing the spring-type brake actuators (12a, 12b; 12e, 12f) of at least one axle (2; 6) is applied indirectly or directly through actuation of the service brake actuation device (14) by means of the overload protection relay valve (22, 62).

15. Brake system according to Claim 10, wherein the ASR valve (68) is connected to a control connection (38) of a further shuttle valve device (20), the second connection (70) of which is connected to the service brake actuation device (14) and the third connection (72) of which is connected to an overload protection relay valve (62) for releasing the spring-type brake actuators (12a, 12b; 12e, 12f) and directly or indirectly via a relay valve (44) to at least one service brake actuator (10c-10f) of at least one of the axles (4, 6).

16. Brake system according to Claim 10, wherein the pressure control module (74) is connected to a control connection (38) of a shuttle valve device (29), the second connection (34) of which is connected directly or via a relay valve (78) to the spring-type brake actuators (12a, 12b; 12e, 12f) to be released and the third connection (30) of which is connected directly or via a relay valve (78) to the parking brake actuation device (16) for actuating the spring-type brake actuators (12a-12f).

17. Brake system according to either of Claims 15 or 16, wherein the pressure control module (74) is arranged between the service brake actuation device (14) and at least one ABS valve (46) assigned to the service brake actuator (10, 10b) such that the pressure applied by the pressure control module (74) can be isolated from the assigned service brake actuator (10a, 10b).

18. Brake system according to Claim 15, wherein the shuttle valve device (20) is connected to the pressure control module (82) of at least one axle (4) which is not to be released or which does not have any spring-type brake actuators (12a - 12f).

## Revendications

1. Système de freinage (1) pour un véhicule à moteur ayant au moins deux essieux, en particulier pour un véhicule utilitaire, comprenant au moins deux moyens de freinage de roue (8a - 8f) dont chacun continent un actionneur de frein de service (10a - 10f) respectif et un actionneur de frein à ressort (12a - 12f) qui peut être dégagé via une source de pression de commande (18) et une conduite de commande, dans lequel au moins un moyen de freinage de roue (8a - 8f) respectif à chaque desdits au moins deux essieux peut être actionné moyennant au moins un moyen actionneur de frein de service (14) et un moyen actionneur de frein de stationnement (16), au système de freinage renfermant une fonction à assister l'ajustement le contrôle de niveau, moyennant duquel un moyen de freinage de roue (8c, 8d; 8e, 8f) est commandable moyennant la force élastique de l'actionneur de frein à ressort (12c, 12d) y affecté afin de fixer la position du véhicule à moteur, **caractérisé en ce que** ladite source de pression de commande (18) pour le dégagement dudit actionneur de frein à ressort (12a, 12b ; 12e, 12f) d'au moins un moyen de freinage de roue (8a, 8b ; 8e, 8f) additionnel est un circuit de pression dudit moyen actionneur de frein de service (14).

2. Système de freinage (1) selon la revendication 1, **caractérisé en ce que** le circuit de pression dudit moyen actionneur de frein de service (14), qui est employée en tant que source de pression de commande (18), contient une soupape ASR (68) et/ou est un module régulateur de pression (74) d'un système électronique de freinage (EBS).

3. Système de freinage (1) selon la revendication 1 or 1, **caractérisé en ce que** ledit au moins un actionneur de frein à ressort (12a, 12b ; 12e, 12f) d'au moins un desdites essieux (2, 6) peut être dégagé moyennant la pression de commande indépendamment de actionneur de frein à ressort (12c, 12d) d'au moins un essieu additionnel (4) du véhicule.

4. Système de freinage (1) selon une quelconque des revendications précédentes 1 à 3, dans lequel au moins une des pressions contrôlées par ledit moyen actionneur de frein de service (14) est retenue par au moins une soupape ABS (46, 48) d'au moins un actionneur de frein de service (10a, 10b) y affecté.

5. Système de freinage (1) selon une quelconque des revendications précédentes 1 à 3, dans lequel au moins une des pressions contrôlées par ledit moyen actionneur de frein de service (14) est retenue par au moins une soupape ABS (46, 48) de tous les actionneurs de frein de service (10a, 10b, 10c, 10d, 10e, 10f) affectés, au véhicule étant protégé contre un déplacement involontaire moyennant au moins un actionneur de frein à ressort (12c, 12d).

6. Système de freinage (1) pour un véhicule à moteur à deux essieux, en particulier pour un véhicule utilitaire, comprenant au moins deux moyens de freinage de roue (8a - 8f), dont chacun renferme un actionneur de frein de service (10a - 10f) et un actionneur de frein à ressort (12a - 12f), qui peuvent être dégagé via une source de pression de commande (18) et une conduite de commande, dans lequel au moins un moyen de freinage de roue (8a - 8f) respectif à chacun desdits au moins deux essieux est commandable moyennant au moins un moyen actionneur de frein de service (14) et un moyen actionneur de frein de stationnement (16), **caractérisé en ce que** le système de freinage comprend une fonction à assister le contrôle de niveau, moyennant de laquelle
- lesdits actionneurs de frein à ressort (12a, 12b; 12e, 12f) de tous les moyens de freinage de roue (8a, 8b; 8e, 8f) sont dégagés moyennant une pression de commande appliqué à partir d'une source de pression de commande (18) via une conduite de commande (40) par un circuit de pression dudit moyen actionneur de frein de service (14),
- au moins un moyen de freinage de roue (8c, 8d; 8e, 8f) est actionné par actionnement dudit actionneur de frein de service (10c - 10f) afin de fixer le véhicule à moteur en sa position, à au moins un actionneur de frein de service (10a, 10b) restant relié audit moyen actionneur de frein de service (14), en particulier, de façon, que ledit au moins un actionneur de frein de service (10a, 10b) protégé le véhicule contre un déplacement involontaire.

7. Système de freinage (1) selon la revendication 6, dans lequel l'actionnement dudit moyen actionneur de frein de service (14) agit sur au moins un actionneur de frein de service d'au moins un essieu et sert, en même temps, en tant que source de pression de commande d'au moins un autre essieu et de tous les essieux.

8. Système de freinage (1) selon une quelconque des revendications précédentes, dans lequel ledit moyen actionneur de frein de service (14) est une soupape de frein à pied, ou dans lequel, en particulier, ledit moyen actionneur de frein de service (14) consiste en au moins un module régulateur de pression (80, 82).

9. Système de freinage (1) selon une quelconque des revendications précédentes, dans lequel ledit moyen actionneur de frein de stationnement (16) est une soupape de frein à main, ou dans lequel ledit moyen actionneur de frein de stationnement (16) est un modulateur de pression d'un système de freinage électropneumatique de stationnement.

10. Système de freinage (1) selon une quelconque des revendications précédentes, dans lequel un premier port (30) d'un moyen à vanne de sélection (20) est relié indirectement ou directement audit moyen actionneur de frein de stationnement (16), un deuxième port (34) est relié auxdits actionneurs de frein à ressort (12a, 12b; 12e, 12f) à relâcher, et un troisième port (38) est relié à ladite source de pression de commande (18) d'une telle manière, qu'on puisse appliquer la pression plus haute parmi les deux pressions de ladite source de pression de commande (18) et dudit moyen actionneur de frein de stationnement (16) aux actionneurs de frein à ressort à relâcher (12a, 12b; 12e, 12f).

11. Système de freinage (1) selon la revendication 10, dans lequel une vanne de sélection sert en tant que moyen à vanne de sélection (20), ou dans lequel, en particulier, une valve relais de protection contre les surcharges (22) sert en tant que moyen à vanne de sélection (20).

12. Système de freinage (1) selon la revendication 11, dans lequel ledit moyen à vanne de sélection (20) est apte à être commandé par la pression indirectement ou directement appliqué via ledit moyen actionneur de frein de service (14) pour un mouvement en une position de travail, dans laquelle actionneurs de frein à ressort (12a, 12b; 12e, 12f) dudit au moins un essieu à ouvrir (2, 6) sont relâchés, ou dans lequel ledit moyen à vanne de sélection (20) est apte à commandé par la pression indirectement ou directement appliquée via ladite soupape ASR (68) pour un mouvement en une position de travail, dans laquelle lesdits actionneurs de frein à ressort (12a, 12b; 12e, 12f) dudit au moins un essieu (2, 6) à ouvrir sont relâchés.

13. Système de freinage (1) selon une quelconque des revendications précédentes, dans lequel une valve relais de protection contre les surcharges (22, 62) est disposée, qui comprend un port (24) relié via une conduite de connexion (26) audit moyen actionneur de frein de service (14), un port (64) relié audit moyen actionneur de frein de stationnement (16) et un port (66) relié aux actionneurs de frein à ressort (12a - 12f).

14. Système de freinage (1) selon la revendication 13, dans lequel la pression de commande à relâcher lesdits actionneurs de frein à ressort (12a, 12b ; 12e, 12f) d'au moins un essieu (2 ; 6) est appliquée indirectement ou directement par actionnement dudit moyen actionneur de frein de service (14) moyennant ladite valve relais de protection contre les surcharges (22, 62).

15. Système de freinage (1) selon la revendication 10, dans lequel ladite soupape ASR (68) est reliée à un port de commande (38) d'un autre moyen à vanne de sélection (20), dont le deuxième port (70) est relié audit moyen actionneur de frein de service (14) et dont le troisième port (72) est relié à une valve relais de protection contre les surcharges (62) afin de relâcher lesdits actionneurs de frein à ressort (12a, 12b; 12e, 12f), et qui est indirectement ou directement reliée via une valve relais (44) à au moins un actionneur de frein de service (10c - 10f) d'au moins un desdits essieux (4, 6).

16. Système de freinage (1) selon la revendication 10, dans lequel ledit module régulateur de pression (74) est relié à un port de commande (38) d'un moyen à vanne de sélection (29), dont le deuxième port (34) est relié auxdits actionneurs de frein à ressort (12a, 12b; 12e, 12f) à relâcher, soit indirectement, soit via une valve relais (78), et dont le troisième port (30) est relié audit moyen actionneur de frein de stationnement (16), soit indirectement, soit via une valve relais (78), pour l'actionnement desdits actionneurs de frein à ressort (12a - 12f).

17. Système de freinage (1) selon une quelconque des revendications 15 ou 16, dans lequel ledit module régulateur de pression (74) est disposé entre ledit moyen actionneur de frein de service (14) et une soupape ABS (46) affectée à au moins un desdits actionneurs de frein de service (10a, 10b), d'une telle manière, que la pression appliquée par ledit module régulateur de pression (74) peut être découplée de l'actionneur de frein de service (10a, 10b) y affecté.

18. Système de freinage (1) selon la revendication 15, dans lequel ledit moyen à vanne de sélection (20) est relié audit module régulateur de pression (82) dudit au moins un essieu (4), qui n'est pas à relâcher, ou qui n'est pas muni des actionneurs de frein à ressort (12a - 12f).
